# EUROPEAN PATENT APPLICATION

(11) **EP 0 605 023 A1**
(43) Date of publication of application: **06.07.1994**
(21) Application number: 93203017.4
(22) Date of filing: 28.10.1993
(51) Int. Cl.: B01D 71/02

(54) **Method for making an asymmetrical, inorganic, porous structure**

(30) Priority: 30.12.1992 BE 9201167
(71) Applicant: "VLAAMSE INSTELLING VOOR TECHNOLOGISCH ONDERZOEK", afgekort "V.I.T.O.", B-2400 Mol (BE)
(72) Inventor: Brauns, Etienne, B-2400 Mol (BE)
(74) Representative: Debrabandere, René

(57) **Abstract**

Method for making an asymmetrical, porous structure, according to which inorganic powder particles are applied onto a porous, inorganic support, the average diameter of which is smaller than half the average diameter of the open pores in the inner texture of the support, characterized in that the inorganic powder particles are applied on the support when they are dry and in that they are pressed into the continuous, empty space on the surface of the support by means of a mechanical treatment, after which these inorganic powder particles are sintered.

## Description

The invention concerns a method for making an asymmetrical, inorganic, porous structure, according to which inorganic powder particles are applied onto a porous, inorganic support and are sintered, the average diameter of which is smaller than half the average diameter of the open pores in the inner texture of the support.

Asymmetrical, inorganic membranes with a microporous layer of inorganic powder particles are frequently used as filtration means, in particular for particle filtration, microfiltration and ultrafiltration. These membranes retain their shape and do not suffer any noticeable deformation under normal pressures, such as during particle filtration, microfiltration and ultrafiltration. Due to the asymmetry they have a large permeability for a certain thickness. Moreover, they can usually resist higher temperatures than organic membranes in the air. They are but slowly eroded by the solid particles in the liquid to be filtered and can be made very hard. In many cases they are highly resistant to corrosive chemical products.

The manufacture of such an inorganic membrane is described among other in patent FR-A-2 642 984. Ceramic powder particles are applied in suspension on a metal support and subsequently subjected to a thermal treatment. According to patent EP-A-0 344 961 also, ceramic powder particles are applied on a metal support as a sol or suspension without entering the pores, after which these powder particles are dried by a thermal treatment and sintered.

According to patent EP-A-O 320 033, metal oxide powder particles are applied in suspension on a ceramic support, whereby precautions are taken in order to prevent the powder particles from entering the pores of the support. These powder particles are dried and sintered by means of a thermal treatment at 1200 °C. The application of ceramic powder particles by means of a solution, suspension or gel on a ceramic, porous support and the subsequent drying and sintering of said powder particles is also described in patents EP-A-0 242 208 and FR-A-2 604 920.

According to these known methods, a porous mass with a slight thickness is obtained on the porous support with a sharp boundary between the two.

Due to the use of liquid as a transport means for the inorganic powder particles, these known methods are relatively time-consuming.

The invention aims to remedy this disadvantage and to provide a method for the manufacture of an asymmetrical, inorganic, porous structure which is relatively simple and which nevertheless makes it possible to obtain a porous structure of excellent quality which is particularly suited as a filtration membrane, for example for particles filtration.

To this aim the ceramic powder particles are applied on the support when they are dry and pressed into the continuous, empty space on the surface of the support by means of a mechanical treatment, after which these ceramic particles are sintered.

In this way, a network-like, porous mass with open pores is formed on the surface of the support, whose average size is smaller than the average size of the open pores in the inner texture of the support by a factor of ten, since the inorganic powder particles which have been applied have an average diameter which is smaller than half the average diameter of the open pores in the inner texture of the support. The thus obtained continuous network of the porous mass is anchored in the surface of the support. There is no sharp boundary between the structure of the support and the sintered ceramic powder particles.

According to a particular embodiment of the invention, ceramic powder particles are used as inorganic powder particles.

According to a peculiar embodiment of the invention, a ceramic structure is used as a porous, inorganic support.

Consequently, according to this embodiment, the entire structure of ceramic material is resistant to high temperatures and corrosive chemical matter, and it is hard.

According to an advantageous embodiment of the invention, the support is made by bringing a mixture of inorganic powder particles, which are bigger than the above-mentioned inorganic powder particles which are applied on the support, and an inorganic binding agent in the required shape by means of pressing, extrusion, injection moulding or wet moulding, and by calcining and subsequently sintering the binding agent.

According to a practical embodiment of the invention, the mechanical treatment consists in rolling balls over the surface of the support, in which the inorganic powder particles are to be provided, in the presence of the dry inorganic powder particles.

Other particularities and advantages of the invention will become clear from the following description of a method for making an asymmetrical, porous structure, according to the invention. This description is given by way of example only and does not limit the invention in any way. The reference numbers refer to the following drawings, where:
figure 1 shows a picture, taken with an electron microscope, of the filter surface of a porous structure according to the invention;
figure 2 shows a picture analogous to that in figure 1, but of the surface of fracture of the porous structure from figure 1.

For the manufacture of an asymmetrical, inorganic membrane according to the invention, a porous, inorganic support is first made in the known way onto which dry, inorganic powder particles are applied with an average diameter which is smaller than half the average diameter of the pores in the inner texture of the support. By means of a mechanical treatment, these powder particles are pressed at least partially in the continuous, empty space in the border layer on the surface of the support, after which these powder particles are sintered.

The above-mentioned empty space in the outmost border layer is not part of the collection of open pores of the support, since such an open pore belongs to the inner texture of the support and is confined all around by solid matter and also exists individually. Since the empty space is only confined by matter on side and moreover is not discontinuous such as an individual pore, it has no characteristics of a pore. It is part of the surface of the porous structure and together with the solid matter on the surface forms the surface roughness. By applying inorganic powder particles in this continuous, empty space, the surface roughness is actually reduced, but the individual pores of the surface are not modified.

Especially ceramic materials and more in particular oxides, carbides and nitrites are suited as inorganic materials for the powder particles. Especially aluminium oxide and zirconium oxide are very well suited. The average diameter of the inorganic powder particles is preferably situated between 1/2 and 1/40 of the average diameter of the open pores in the inner texture of the support.

The porous support may have any shape whatsoever, such as the shape of a flat plate or a tube or any other hollow shape. It could be made of metal, but practically said support is also made of inorganic material, in particular of ceramic material, for example the same ceramic material as that of the ceramic powder particles to be applied on it. The usual techniques can be used hereby. For example, a mixture of inorganic powder particles and an organic binding agent can be brought in the desired shape, after which the binding agent is calcinated and the whole is subsequently sintered. This bringing into the desired shape can be done in a dry manner, by means of pressing or injection moulding, but also in a wet manner, by means of wet moulding or extrusion.

The inorganic powder particles of the support should of course be bigger than the above-mentioned inorganic powder particles which are applied onto the support. The average diameter of the particles of the support is preferably situated between 1 and 1,000 micron. The average diameter of the open pores of the pores is preferably situated between 0.1 and 200 micron.

The mechanical treatment may consist in letting balls whose diameter is significantly larger than that of the inorganic powder particles roll over the surface of the support where this powder is to be brought in the empty space, in the presence of said powder. This method is particularly suited when the support is tube-shaped. With a flat support, the mechanical treatment may consist in rubbing in inorganic powder particles, for example by means of a roll.

The temperature at which the inorganic powder particles are sintered naturally depends of the inorganic material. To this end the support with the inorganic powder particles is heated to a temperature higher than 0.4 times the melting temperature of the inorganic powder particles. If, however, liquid phase sintering is applied, the sintering temperature may be lower.

In the above-described manner, an asymmetrical membrane is obtained which is very suited for filtration, in particular particle filtration. The ceramic powder particles form a single, continuous network in the surface of the support which forms a matrix in which the outmost powder particles of the support are anchored. A number of these powder particles of the support are still visible on the surface of the membrane through a scanning electron microscope. As the ceramic powder particles are applied in an entirely dry state without any liquid as a transport aid, this method is very simple. Nevertheless, the quality of the membrane is excellent.

The invention will be further illustrated by means of the following example:
A porous aluminium oxide support tube having a length of 47 cm, an inside diameter of 6 mm and an outside diameter of 10 mm was made by isostatically pressing aluminium oxide powder with an average particle size between 5 and 20 micron in the desired shape and subsequently sintering it in an oven at a temperature of 1550 °C.

The average pore diameter of the open pores in the sintered, porous aluminium oxide tube was 3.6 micron.

Dry aluminium oxide powder with an average particle diameter of 1 micron was brought in this tube together with aluminium oxide balls with a diameter of 1,5 mm. By turning the tube around its axis, the powder was mechanically pressed in the continuous, empty space of the inner surface of the tube.

The whole was put in the oven at a temperature of 1550 °C, as a result of which the fine aluminium oxide particles were sintered.

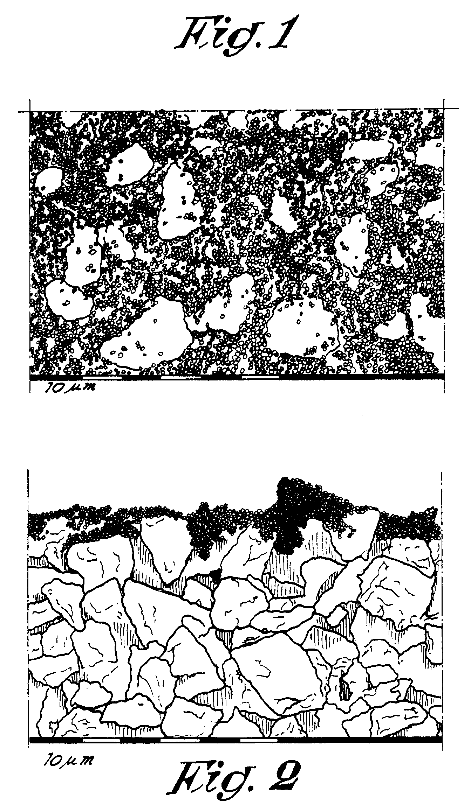

The thus obtained asymmetrical ceramic structure is represented in figures 1 and 2 as seen by a scanning electron microscope, whereby figure 1 shows the structure on the inner side with small pores, i.e. the formed network, and figure 2 shows a surface of fracture through the wall of the tube, from which the asymmetrical structure becomes clear.

The thus manufactured tube was placed in the module of a cross-flow microfiltration unit. The turbid, soiled grinding liquid coming from a grinding machine and consisting of a watery dispersion of silicon carbide and aluminium oxide powder particles was pumped through the tube at a speed of 4 m/sec. and a pressure of 2 bar. A very clear permeate with a flux of 1,000 l/h.m² was obtained.

The invention is by no means limited to the above-described embodiments; on the contrary, within the scope of the patent application, many modifications can be made to the described embodiments.

In particular, the fine ceramic powder should not necessarily be aluminium oxide.

Neither should the support be necessarily made of aluminium oxide. It can also be made of another inorganic material than ceramic material.

## Claims

1. Method for making an asymmetrical, porous structure, according to which inorganic powder particles are applied onto a porous, inorganic support, the average diameter of which is smaller than half the average diameter of the open pores in the inner texture of the support, characterized in that the inorganic powder particles are applied on the support when they are dry and in that they are pressed into the continuous, empty space on the surface of the support by means of a mechanical treatment, after which these inorganic powder particles are sintered.

2. Method according to the above claim, characterized in that ceramic powder particles are used as inorganic powder particles.

3. Method according to the above claim, characterized in that particles from the group oxides, carbides or nitrites or mixtures thereof are used as ceramic powder particles.

4. Method according to the above claim, characterized in that particles from the group formed by aluminium oxide and zirconium oxide are used as ceramic powder particles.

5. Method according to any of the above claims, characterized in that a ceramic structure is used as a porous, inorganic support.

6. Method according to any of the above claims, characterized in that the support is made by bringing a mixture of inorganic powder particles, which are bigger than the above-mentioned inorganic powder particles which are applied on the support, and an organic binding agent in the required shape by means of pressing, extrusion, injection moulding or wet moulding, and by calcining and subsequently sintering the binding agent.

7. Method according to any of the above claims, characterized in that a support is used made of inorganic powder particles with an average diameter situated between 1 and 1,000 micron.

8. Method according to any of the above claims, characterized in that a support is used whose open pores have an average diameter situated between 0.1 and 200 micron.

9. Method according to any of the above claims, characterized in that the mechanical treatment is carried out by rolling balls over the surface of the support in which the inorganic powder particles are to be provided, in the presence of the dry inorganic powder particles.

10. Method according to any of the above claims, characterized in that the average diameter of the inorganic powder particles which are applied on the support is preferably situated between 1/2 and 1/40 of the average diameter of the open pores in the inner texture of the support.
